# EUROPÄISCHE PATENTSCHRIFT

(11) **EP 2 720 906 B1**
(45) Veröffentlichungstag und Bekanntmachung des Hinweises auf die Patenterteilung: **16.12.2015**
(21) Anmeldenummer: 12723427.6
(22) Anmeldetag: 15.05.2012
(51) Int. Cl.: B60R 1/00, G06T 7/20

(54) **NACHRÜSTSATZ FÜR PARKFÜHRUNG**
RETROFIT PARKING ASSISTANCE SET
KIT D'ASSISTANCE AU STATIONNEMENT

(30) Priorität: 15.06.2011 DE 102011077555
(43) Veröffentlichungstag der Anmeldung: 23.04.2014
(73) Patentinhaber: Robert Bosch GmbH, 70442 Stuttgart (DE)
(72) Erfinder: SCHEUERLE, Thomas, 71711 Murr (DE); SCHNEIDER, Marcus, 71642 Ludwigsburg (DE)
(86) Internationale Anmeldenummer: PCT/EP2012/059037
(87) Internationale Veröffentlichungsnummer: WO 2012/171740

(56) Entgegenhaltungen:
- EP-A1- 1 580 687
- EP-A1- 2 015 253
- EP-B1- 1 536 978
- EP-B1- 1 562 807
- DE-A1- 19 947 766
- US-A- 6 115 651
- US-A1- 2010 085 427

## Beschreibung

### Stand der Technik

Die Erfindung betrifft ein Verfahren zur Ermittlung einer Relativposition zwischen einem Fahrzeug und einem Objekt.

DE 10 2006/010295 A1 betrifft ein Stereokamerasystem zur Objekterfassung im Straßenverkehr. Zur Geschwindigkeitserfassung wird ein Kamerasystem eingesetzt. Dieses umfasst mindestens zwei verschiedenartige Bildaufnehmer. Die Aufnahmebereiche der einzelnen Bildaufnehmer überlappen sich zumindest teilweise und die Daten der Bildaufnehmer werden zu einem 3-D-Bild zusammengefügt. In einer besonderen Ausgestaltung sind Bildaufnehmer vorgesehen, die in unterschiedlichen Spektralbereichen empfindlich sind.

DE 10 2005/003 354 A1 bezieht sich auf eine Kamera zur Erfassung einer Geschwindigkeit, insbesondere einer relativen Geschwindigkeit zwischen einem Kollisionsobjekt und einem Fahrzeug. Eine relative Geschwindigkeit und ein Abstand zwischen dem einen Kollisionsobjekt und dem Fahrzeug werden zu verschiedenen Messzeiten während eines Annäherungsvorgangs des Kollisionsobjektes an das Fahrzeug erfasst. Mögliche Kollisionszeitpunkte werden anhand von Messwerten der Relativgeschwindigkeit und des Abstandes vorausberechnet. Die Messwerte der Relativgeschwindigkeit und des Abstandes und/oder vorausberechnete wirkliche Kollisionszeitpunkte werden zusammen mit den Messzeiten gespeichert und ein tatsächlicher Kollisionszeitpunkt des Fahrzeuges mit dem Kollisionsobjekt wird erfasst. Der tatsächliche Kollisionszeitpunkt wird mit den vorausberechneten möglichen Kollisionszeitpunkten verglichen und der Messwert der Relativgeschwindigkeit so ausgewählt, dass der zugehörige vorausberechnete mögliche Kollisionszeitpunkt die geringste Abweichung vom tatsächlichen Kollisionszeitpunkt aufweist. DE 10 221 513 A1 offenbart eine Bildanalyse zur Ermittlung einer Geschwindigkeit. Es wird ein Verfahren zur Darstellung eines in einem Originalformat elektronisch erfassten Originalbildes in einem vom Originalformat hinsichtlich des Breite-Höhen-Verhältnisses abweichenden Anzeigeformat auf einer Anzeigeeinheit als deformiertes Anzeigebild offenbart. Eine Deformationsfunktion mit mindestens einem Translationsanteil wird bestimmt, welche die Originalkoordinaten in Anzeigekoordinaten überführt, wobei ein Hauptbereich des Bildes undeformiert und ein Nebenbereich des Bildes deformiert abgebildet werden.

Typischerweise stellen Fahrerassistenzsysteme eine oder mehrere Zusatzeinrichtungen in einem Fahrzeug zur Unterstützung des Fahrers in bestimmten Fahrsituationen bereit. Solche Zusatzeinrichtungen bzw. Subsysteme sind beispielsweise SDW (Seitenwarnungssysteme), ABS (Antiblockiersystem), ESP (Elektronisches Stabilitätsprogramm), ein Abstandsregeltempomat ("Adaptive Cruise Control", ACC) oder Einparkhilfen ("Park Distance Control", PDC).

Besonders in engen Rangiersituationen wie Einparkmanövern oder in Situationen, bei denen der Fahrer nur eingeschränkte Rangiermöglichkeiten hat, können Fahrerassistenzsysteme den Fahrer unterstützen. Dazu umfassen Fahrassistenzsysteme typischerweise eine passive Lenkführung, d.h. eine Lenkführung ohne aktive Lenkeingriffe des Fahrers. Auf diese Weise kann der Fahrer während des Längseinparkens oder Quereinparkens unterstützt werden. Solche Fahrassistenzsysteme können zumindest teilweise serienmäßig im Fahrzeug integriert sein, wobei auf Ultraschall basierende Einparkhilfen auch als durch Laien installierbare Nachrüstsätze erhältlich sind.

Es existieren auch Fahrerassistenzsysteme, die den Fahrer beim Manövrieren in schwierigen Situationen, so zum Beispiel im Parkhaus durch audiovisuelle Warnung und Informationen unterstützen. Einparkhilfen, die auf einer Rückfahrkamera basieren, können in einer möglichen Ausführungsform auch als leicht zu installierende Selbstnachrüstsätze ausgeführt sein. Nachrüstsätze, die einfach in Fahrzeuge eingebaut werden können, sind auf Ultraschall basierende Einparkhilfen.

Des Weiteren sind Seitenwarnungssysteme (SDW) bekannt, bei denen eine Abstandswarnung auf Objekte neben dem Fahrzeug erfolgt, wobei diese Objekte während einer vorangegangenen Vorbeifahrt von einer Abstandssensorik erfasst und hinsichtlich ihrer Position relativ zum vorbeifahrenden Fahrzeug verfolgt werden. Somit brauchen diese Objekte zum Zeitpunkt der Warnung nicht mehr von der Abstandssensorik erfasst zu werden, was zu einer Einsparung von Seitensensoren führt. In diesem Zusammenhang ist auch der Begriff "virtuelle Seitensensoren" üblich. Diese Systeme unterscheiden sich von einer herkömmlichen Parkpilotfunktionalität dadurch, dass auch vor Objekten und Hindernissen gewarnt und informiert werden kann, selbst wenn diese sich,aktuell nicht im Erfassungsbereich der Sensorik befinden, wobei die Sensorik auf Ultraschall oder Radar basieren kann. Möglich wird dies dadurch, dass diese Systeme intern eine Karte oder eine vergleichbare Informationsstruktur aus ihrer Umwelt bilden, und diese über die aktuelle Fahrzeugposition als Grundlage zum Erkennen von Gefährdungen verwenden. Aus diesem Grunde benötigen derartige Systeme eine Odometrie, d.h. ein Subsystem, welches die aktuelle Fahrzeugposition zur Verfügung stellt.

Eine Schwierigkeit, die sich beim Einsatz von Seitenwarnungssystemen herauskristallisiert hat, ist der Umstand, dass zur Bestimmung der Objektpositionen für die Zeit, in der die Objekte nicht mehr erfasst werden, die Fahrzeugbewegung relativ zu diesen Objekten sehr exakt zu bestimmen ist. Der Grund dafür ist, dass vorgenommene Schätzungen von Abweichungen von der realen Position, so zum Beispiel in der Größenordnung von etwa 10 cm, durchaus zu einer Kollision eines solchen Objektes, zum Beispiel einem Außenspiegel des Fahrzeuges, führen können.

Aus diesem Grund ist es gemäß der bisher bekannten Ausführungsvarianten von Seitenwamungssystemen zwingend, die Weginformationen des ESP oder des ABS-Systems des Fahrzeuges auszunutzen. Dies wiederum setzt jedoch den Zugang zum Fahrzeuginternen CAN-Bus (Controller Area Network-Bus) und eine genaue Kenntnis der jeweils auszuwertenden CAN-Botschaft(en) voraus (siehe EP1536978B).

Speziell bei nachrüstbaren Systemen ist der Zugang zu einem fahrzeuginternen CAN-Bus äußerst schwer oder überhaupt nicht möglich. Dadurch ist es nur mit sehr hohem Aufwand möglich, ein Seitenwarnungssystem (SDW) in Form eines Nachrüstsatzes bereitzustellen.

### Darstellung der Erfindung

Diese Aufgabe wird durch das Verfahren nach Anspruch 1 gelöst.

Erfindungsgemäß wird vorgeschlagen, die Bestimmung der Fahrzeugbewegung des Fahrzeuges relativ zu einem vorher, beispielsweise im Rahmen einer Vorbeifahrt erfassten Objektes, auf Basis von Videoinformationen zu bestimmen. Dazu ist beispielsweise im Heckbereich des Fahrzeuges, in einer in Bezug auf ein Drehzentrum des Fahrzeuges, zum Beispiel das Zentrum der Hinterachse, vordefinierten Montageposition eine Videokamera im Fahrzeuginneren angeordnet. Bevorzugt wird deren Bild hinsichtlich der Bewegung der Kamera relativ zur Umgebung ausgewertet. Die erfasste Bewegung wird rechnerisch in Beziehung zur Montageposition der Kamera und der Objekterfassungssensoren gesetzt. Dabei können die Objektsensoren zum Beispiel SDW-Sensoren darstellen, die als Ultraschallsensoren vorne seitlich am Fahrzeug angebracht sein können.

Anhand der Beziehung wird die relative Positionsänderung des Fahrzeuges zum zuvor erfassten Objekt bestimmt.

Der erfindungsgemäß vorgeschlagenen Lösung folgend, wird eine Zusammenführung der Informationen, die aus einer Objekterfassung durch Ultraschallabstandssensoren, d.h. durch seitlich am Fahrzeug angebrachte SDW-Sensoren, mit einer auf einer Verschiebung von Videobildern basierenden erkannten Fahrzeugbewegung vorgenommen. Bevorzugt wird bei der erfindungsgemäß vorgeschlagenen Lösung eine beispielsweise im Heckbereich des Fahrzeuges fest installierbare Videokamera eingesetzt, die ebenso wie nachrüstbar gestaltete Distanzerfassungssensoren, die beispielsweise gemäß des-Ultraschallprinzips arbeiten, in einem Fahrzeug montiert sind. Ein Nachrüstsatz umfasst eben jene heckseitig angebrachte Videokamera, ein Steuergerät mit einer Signalausgabe, sei es akustisch oder sei es visuell, sowie eine Verbindung zu zwei seitlich am Fahrzeug angebrachten Distanzerfassungssensoren, die bevorzugt nach dem Prinzip der Ultraschallabstandsmessung arbeiten.

Die erfasste Bewegung des Fahrzeuges wird bevorzugt rechnerisch in Beziehung zur festen Montageposition der Videokamera und der Objekterfassungssensoren und des Fahrzeugdrehpunktes in Beziehung gesetzt. Die erfindungsgemäß vorgeschlagene Erfassung der Bewegung eines Fahrzeuges kann auch zur passiven Parkführung ausgenutzt werden. Darunter ist ein Unterstützungssystem für den Fahrer eines Fahrzeuges zu verstehen, welches dem Fahrer mit Lenk- und Fahranweisungen entlang einer vorher berechneten Trajektorie entlangführt und ein Einparkmanöver was bevorzugt in Rückwärtsrichtung abläuft, unterstützt.

### Vorteile der Erfindung

Durch die erfindungsgemäß vorgeschlagene Lösung ist kein Zugang zu einem fahrzeuginternen Datenbus, beispielsweise dem fahrzeuginternen CAN-Datenbus notwendig. Dadurch besteht die Möglichkeit, ein Stand-Alone-System ohne Verknüpfung mit anderen, im Fahrzeug verbauten Systemen, wie zum Beispiel dem ABS-System bzw. dem ESP-System herzustellen, sodass die Ausführung eines Nachrüstsatzes unter Verzicht auf die oben genannten Zugriffserfordernisse realisierbar ist. Der Nachrüstsatz zur Bestimmung der Fahrzeugbewegung und der Ermittlung einer Kollision kann dadurch sehr kostengünstig, nur einige wenige Komponenten umfassend ausgestaltet werden.

Die Komponenten des Nachrüstsatzes sind die mindestens zwei Sensoren zur Seitenabstandswarnung (SDW), ein Steuergerät sowie eine Heckseitig montierbare Videokamera und entsprechende Datenübertragungsleitungen zwischen den genannten Komponenten.

Bei Einsatz der erfindungsgemäß vorgeschlagenen Lösung wird durch den Nachrüstsatz eine optische Odometrie zusätzlich zur klassisch im Fahrzeug verbauten Odometrie angewendet, wobei letztgenannte auf Radimpulsgeberbasis arbeitet. Durch die zusätzlich zur klassischen im Fahrzeug verbauten Odometrie zusätzlich verwendetet optische Geometrie kann die Genauigkeit und Verfügbarkeit der klassischen Odometrie insbesondere im Bereich geringer Fahrzeuggeschwindigkeiten erhöht werden. In diesem Bereich liefern die meisten, in Fahrzeugen verbauten Radimpulsgeber, keine zuverlässigen Fahrtrichtungsinformationen, welche doch durch die optische Odometrie der erfindungsgemäß vorgeschlagene Vorrichtung unter Einsatz der optischen Odometrie unterstützt werden kann.

### Kurze Beschreibung der Zeichnungen

Anhand der Zeichnung wird die Erfindung nachstehend eingehender beschrieben.

Es zeigt:
- Figur 1: eine erste Fahrsituation eines Fahrzeuges, welches ein seitlich angeordnetes Objekt passiert,
- Figur 2: eine zweite Fahrsituation des Fahrzeuges gemäß Figur 2 nach Passage des Objektes und bei eine Annäherung an dieses, und
- Figur 3: in schematischer Darstellung die Zusammenführung der Informationen aus der Objekterfassung und der Verfolgung der Fahrzeugbewegung anhand von Videobildauswertungen, aufgenommen durch eine Videokamera im Inneren des Fahrzeuges.

### Ausführungsformen der Erfindung

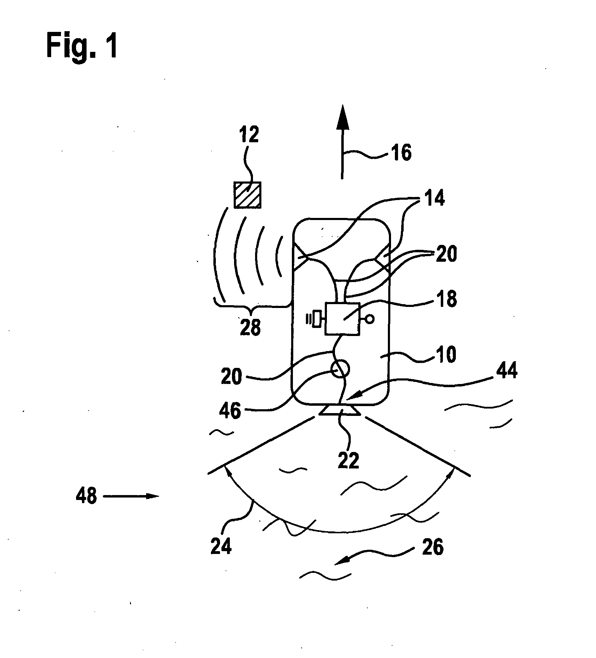

Im Folgenden wird die erfindungsgemäß vorgeschlagene Lösung anhand eines Ausführungsbeispieles beschrieben, gemäß dem ein Kamerasystem, insbesondere eine Videokamera im Heckbereich eines Fahrzeuges 10 angeordnet ist und demzufolge einen Bereich hinter dem Fahrzeug 10 erfasst. Es besteht ebenso gut die Möglichkeit, das Kamerasystem 22 im Bereich der Windschutzscheibe oder an einem der Seitenscheiben des Fahrzeuges zu installieren. Entscheidend ist ein fester Einbauort des Kamerasystems 22 sowie dessen Fähigkeit, kontinuierlich Bilder, insbesondere Videobilder aufzunehmen, die an ein Steuergerät 18 übermittelt werden. In der Darstellung gemäß Figur 1 ist die Passage eines Fahrzeuges 10 entlang eines sich links neben dem Fahrzeug 10 befindenden Objektes 12 dargestellt.

Aus der Darstellung gemäß Figur 1 geht hervor, dass ein Fahrzeug 10 sich in Fahrtrichtung 16 bewegt. Seitlich des Fahrzeuges 10 im Ausführungsbeispiel gemäß Figur 1 auf der linken Seite des Fahrzeuges 10 befindet sich ein beispielsweise stationäres Objekt 12. Dieses Objekt 12 wird während der Bewegung des Fahrzeuges 10 in Fahrtrichtung 16 durch einen Objekterfassungssensor 14, der sich seitlich am Fahrzeug 10 befindet, erfasst. Bei den Objekterfassungssensoren 14 kann es sich beispielsweise um Ultraschallsensoren handeln, die im Bereich der Kotflügel des Fahrzeuges 10 angeordnet sind und über schematisch angeordnete Verbindungsleitungen 20, Daten an ein Steuergerät 18 übermitteln. Das Steuergerät 18 steht mit der Stromversorgung des Fahrzeuges 10 in Verbindung, und stellt jedoch eine nachrüstbare Komponente eines Nachrüstsatzes zur Ermittlung einer Relativposition zwischen einem Fahrzeug und einem seitlich befindlichen Objekt 12 dar. Des Weiteren ist im Fahrzeug 10, insbesondere im Heckbereich, ein Kamerasystem 22 vorgesehen. Das Kamerasystem 22 erfasst einen hinter dem Fahrzeug 10 liegenden Erfassungsbereich 24, der beispielsweise eine Bodenstruktur 26 umfasst, wie in Figur 1 angedeutet. Das Kamerasystem 22 steht ebenfalls über mindestens eine Verbindungsleitung 20 mit dem ebenfalls beispielsweise am Dachhimmel des Fahrzeuges 10 angeordneten Steuergerät 18 zum Austausch von Daten in Verbindung. Das Kamerasystem 22 ist insbesondere als eine Videokamera beschaffen, die kontinuierlich Videobilder aufnimmt, aus der sich eine Fahrzeugbewegung, so zum Beispiel eine Trajektorie 30 des Fahrzeuges 10 in Fahrtrichtung 16 ermitteln lässt. Wie Eingangs bereits erwähnt, kann das Kamerasystem 22 anstelle im Heckbereich des Fahrzeuges 10 auch seitlich innerhalb des Fahrgastraumes oder auch im Bereich der Windschutzscheibe des Fahrzeuges 10 angeordnet sein.

Mit Bezugszeichen 46 ist ein Bezugspunkt bezeichnet, der beispielsweise durch das Zentrum der Hinterachse des Fahrzeuges 10 dargestellt sein kann. Als Bezugspunkt 46 kann auch ein anderer Fixpunkt der Karosserie des Fahrzeuges 10 gewählt werden, so zum Beispiel bei Fahrzeugen mit Heckantrieb, der Getriebetunnel oder dergleichen. Das Kamerasystem 22 gemäß der vorliegenden Erfindung wird in einer fixen Einbauposition 44 innerhalb des Fahrzeuges 10 montiert, hier beispielsweise im Heckbereich unmittelbar hinter der Heckscheibe des Fahrzeuges 10.

Die über die Verbindungsleitungen 20 mit dem Steuergerät 18 verbundenen Objekterfassungssensoren 14 senden beispielsweise senkrecht zur Längsseite des Fahrzeuges 10 verlaufende Ultraschallsignale aus, die durch eine Wellenausbreitung 28 gekennzeichnet sind.

Die in der Einbauposition 44 - in der Ausführungsvariante gemäß Figur 1 im Heckbereich des Fahrzeuges 10 montierte Kamera - nimmt kontinuierlich Videobilder zu unterschiedlichen Aufnahmezeitpunkten 48 und Position 50 auf, die ebenfalls kontinuierlich an das Steuergerät 18 übermittelt werden.

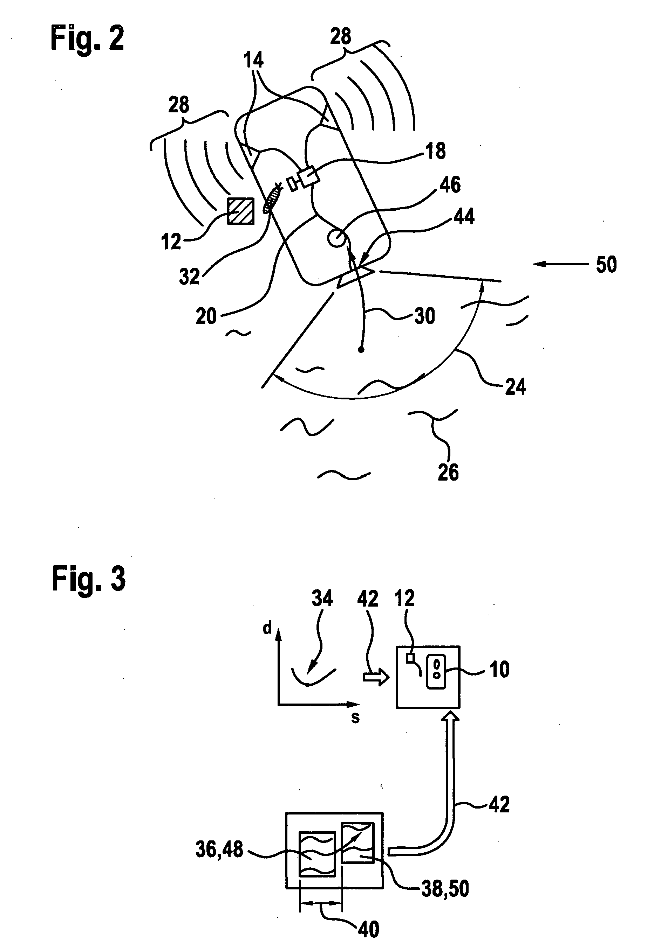

Der Darstellung gemäß Figur 2 ist eine Fahrsituation des Fahrzeuges 10 zu entnehmen, bei dem dieses das Hindernis 12 zwar seitlich passiert hat, sich jedoch aufgrund eines dementsprechenden Lenkeinschlages an dieses annähert.

Aus der Darstellung gemäß Figur 2 geht hervor, dass sich die Fahrtrichtung des Fahrzeuges 10 geändert hat. Während in der Darstellung gemäß Figur 1 eine Geradeausfahrt in Fahrrichtung 16 vorlag, hat sich das Fahrzeug gemäß der Trajektorie 30, wie in Figur 2 dargestellt, nach links bewegt, und hat sich dem, zuvor bei der Passage durch die Ultraschallsignale 28 Objekterfassungssensoren 14 detektierten Objekte 12, bis auf einen geringen Abstand genähert. Figur 2 zeigt des Weiteren, dass sich auch der Erfassungsbereich 24, der durch das Kamerasystem 22 im Heckbereich 10 des Fahrzeuges erfasst wird geändert hat, verglichen zu dem Bereich, der zu einen ersten Aufnahmezeitpunkt 48 bei Geradeausfahrt des Fahrzeuges in Fahrtrichtung 16 durch das Kamerasystem 22 erfasst wird. Dies bedeutet, dass sich ein, zum ersten Aufnahmezeitpunkt 48 aufgenommenes Videobild von demjenigen unterscheidet, welches zu einem zweiten Aufnahmezeitpunkt 50, vgl. Darstellung gemäß Figur 2 - bei Linksbewegung des Fahrzeuges 10 - gemachten zweiten aufgenommenen Videobild 38 unterscheidet. Beide Videobilder 36, 38 entstehen zu unterschiedlichen Aufnahmezeitpunkten 48, 50 durch das Kamerasystem 22, aus denen die Relativbewegung des Fahrzeuges 10 in Bezug auf seine Umgebung ermittelt werden kann.

Der Vollständigkeit halber sei erwähnt, dass das Fahrzeug 10 in seiner Position relativ zum Objekt 12 dieselben Komponenten eines Nachrüstsatzes, d.h. mindestens ein Objekterfassungssensor 14, mindestens ein Steuergerät 18 sowie ein Kamerasystem 22 - hier angeordnet im Heckbereich des Fahrzeuges 10 - umfasst. Die einzelnen Komponenten, Objekterfassungssensoren 14, sowie Steuergerät 18 sowie das Kamerasystem 22, sind analog zur Darstellung gemäß Figur 1 über Verbindungsleitungen 20, die dem Datenaustausch zwischen den genannten Komponenten dienen, miteinander verbunden.

Aus einem Vergleich der Figuren 1 und 2 und den dort dargestellten Positionen des Fahrzeuges 10 geht hervor, dass durch ein, zum ersten Aufnahmezeitpunkt 48 durch das Kamerasystem 22 aufgenommenen ersten Videobild 36, übermittelt an das Steuergerät 18, und durch Übermittlung eines weiteren, zweiten Videobildes 38, welches zum zweiten Aufnahmezeitunkt 50 durch das Kamerasystem 22 aufgenommen wurde und an das Steuergerät 18 übermittelt wurde, die Fahrzeugbewegung 30 relativ zu dem zuvor durch die Sensoren 14 erfassten Objekt 12 folgen kann. Dazu werden die zu unterschiedlichen Aufnahmezeitpunkten 48, 50 aufgenommenen Videobilder 36, 38 hinsichtlich der Bewegung des Kamerasystems 22, welches ortsfest im Fahrzeug 10 installiert ist, relativ zur Umgebung ausgewertet. Das rechnerische In-Beziehung-Setzen der durch die Auswertung der Videobilder 36, 38 erfassten Fahrzeugbewegung 30 zur Einbauposition 44 des Kamerasystems 22 sowie der ebenfalls stationär am Fahrzeug 10 angeordneten Objekterfassungssensoren 14 erlaubt eine Auswertung der Fahrzeugbewegung 30.. Ferner wird die durch das Kamerasystem erfasste Fahrzeugbewegung 30 in Beziehung zu einen Fahrzeugdrehpunkt 46, hier beispielsweise das Zentrum der Hinterachse des Fahrzeuges 10, gesetzt.

Anhand dieser Verknüpfung wird eine relative Positionsänderung des Fahrzeuges 10 zum zuvor erfassten Objekt 12 bestimmt. In der Darstellung gemäß Figur 2 ist angedeutet, dass bei der dort stattgefundenen Annäherung des Fahrzeuges 10 an das zuvor in der Vorbeifahrt gemäß Figur 1 links des Fahrzeuges 10 erfasste Objekt 10 durch das Steuergerät 18, ein Warnsignal erzeugt wird. Bei dem Warnsignal kann es sich um ein akustisches und/oder optisches Warnsignal handeln, ähnlich wie aus den Fahrassistenzsystemen zum Einparken, so dass der Fahrzeuglenker auf die bevorstehende Kollision mit dem stationären Objekt 12 hingewiesen wird.

Der Darstellung gemäß Figur 3 ist zu entnehmen, wie die Information, d.h. Videobilder des Kamerasystemes, sowie die von den Objekterfassungssensoren aufgenommene Information miteinander verknüpft werden.

Figur 3 zeigt, dass bei einer Überlagerung der zu unterschiedlichen Aufnahmezeitpunkten 48, 50 aufgenommenen Videobilder 36, 38, eine Videobildverschiebung 40 zwischen diesen detektiert wird. Diese wird im Wege einer Zusammenführung 42 an das Steuergerät 18 übersandt. Die Erfassung einer Videobildverschiebung 40, d.h. die Detektion einer Fahrzeugbewegung 30 relativ zur Umgebung, wird durch das Kamerasystem 22 kontinuierlich aufgenommen und ebenfalls kontinuierlich an das Steuergerät 18 übermittelt.

Des Weiteren erfolgt die Übermittlung einer Objekterfassung 34 durch die Objekterfassungssensoren 14 ebenfalls an das Steuergerät. Das Objekt 12, vergleiche Darstellung gemäß der Figuren 1 und 2, wird gemäß Figur 1 während einer Vorbeifahrt an diesem von mindestens einem Objekterfassungssensor 14 erfasst, und hinsichtlich seiner Position relativ zum Fahrzeug 10 entsprechend dessen Bewegung verfolgt, so dass das Objekt 12 zum Zeitpunkt der Ausgabe einer akustischen oder optischen Warnung nicht mehr unmittelbar von der Abstandssensorik erfasst zu werden braucht, sondern bereits als vorhanden im Steuergerät 18 klassifiziert ist.

Durch die Auswertung der Fahrzeugbewegung 30 relativ zur Umgebung bestimmt durch die Auswertung der zu unterschiedlichen Aufnahmezeitpunkten 46, 48 erfassten Videobilder 36 bzw. 38, unter Berücksichtigung der Montageposition des Kamerasystems 22 im Fahrzeug sowie der Position und des mindestens ein Objekterfassungssensor 14 sowie unter Berücksichtigung des Bezugspunktes 46, kann eine relative Positionsänderung des Fahrzeuges 10 und des zuvor in der Vorbeifahrt gemäß Figur 1 erfassten Objektes 12 bestimmt werden. Das DS-Objekterfassungsdiagramm 34 symbolisiert eine Gruppe von Informationen. In dieser Gruppe von Informationen sind die von den Objekterfassungssensoren 14 gewonnenen Abstandswerte enthalten. Diese Informationen werden mit den Informationen, die aus der Aufnahme von Bildern des Kamerasystems 22 und zwischen diesen Bildern liegenden zeitlichen Verschiebungen 40 gewonnen werden, zusammengeführt.

Entsprechend der in Figur 2 dargestellten Annäherung des Fahrzeuges 10 an das stationäre Objekt 12, kann dessen relative Positionsänderung des zuvor erfassten Objektes 12 bestimmt werden, und in Abhängigkeit vom berechneten Abstand des Fahrzeuges 10 zu dem Objekt 12 eine geeignete Warninformation an den Fahrer ausgegeben werden, so zum Beispiel ein akustischer Warnton oder in unterschiedliche Farben blinkende Leuchtdioden (LED).

Das erfindungsgemäß vorgeschlagene Verfahren zur Ermittlung einer Relativposition zwischen einem Fahrzeug 10 und einem seitlich von diesem befindlichen Objekt 12 benötigt in vorteilhafter Weise keinen fahrzeuginternen Datenbus, insbesondere keinen CAN Datenbuszugang. Dadurch ergibt sich in vorteilhafter Weise, dass die Komponenten des erfindungsgemäß vorgeschlagenen Verfahrens, kostengünstig als Stand-Alone-Systeme ohne Verknüpfung mit anderen, im Fahrzeug 10 verbauten Systemen, ausgebildet werden können. Lediglich ein Anschluss an das Bordnetz des Fahrzeuges 10 ist erforderlich.

Insbesondere können die Komponenten zu einer nachträglichen Implementierung eines Fahrassistenzsystems zur Ermittlung einer Relativposition zwischen dem Fahrzeug 10 und einem seitlich von diesem befindlichen Objekt 12 als Nachrüstsatz gestaltet werden. Dieser Nachrüstsatz umfasst in vorteilhafter Weise mindestens einen nachträglich am Fahrzeug montierbaren Objekterfassungssensor 14, beispielsweise zum Einbau im Kotflügelbereich des Fahrzeuges 10, ein Steuergerät 18, welches einerseits mit dem Bordnetz des Fahrzeuges 10 verbunden werden kann, und andererseits eine Ausgabeeinheit für eine akustische und/oder optische Warnung an den Fahrzeuglenker bei Annäherung an ein Objekt 12 umfassen kann, sowie ein Kamerasystem 22, bei dem es sich insbesondere um ein Videokamerasystem handelt.

Während im vorstehenden Zusammenhang mit den Figuren 1 und 2 das Kamerasystem 22 in Bezug auf ein im Heckbereich des Fahrzeuges 10 vorgesehene Einbauposition 44 beschrieben wurde, lässt sich das Kamerasystem 22, bevorzugt ausgebildet als Videokamera, auch im Bereich der Windschutzscheibe oder auch seitlich im Fahrzeug montieren. Allein wichtig ist der feste Einbauort des Kamerasystems 22 im Fahrzeug 10, da durch dieses dessen Bewegung relativ zur Umgebung des Fahrzeuges 10 ermittelt wird. Im vorstehenden Zusammenhang wurde ein Bezugspunkt 46 beispielsweise ein Fahrzeugdrehpunkt wie das Zentrum der Hinterachse des Fahrzeuges 10 definiert. Selbstverständlich können auch andere Bezugspunkte 46 definiert werden.

Der Nachrüstsatz, d.h. die Stand-Alone-Unit der Vorrichtung zur Ermittlung einer Relativposition zwischen einem Fahrzeug 10 und einem seitlich von diesem befindlichen Objekt 12 umfasst neben dem mindestens einen Objekterfassungssensor 14, dem Steuergerät 18 und dem insbesondere eine Videokamera umfassende Kamerasystemverbindungsleitungen 22, die auch nachträglich noch im Fahrzeug beispielsweise im Dachhimmel desselben gezogen werden können, so dass die Montage des Nachrüstsatzes auch optisch ansprechend erfolgen kann.

Das erfindungsgemäß vorgeschlagene Verfahren zur Ermittlung einer Relativposition zwischen einem Fahrzeug 10 und einem seitlich von diesem befindlichen Objekt 12, in seiner Ausprägung als nachträglich montierbarer Nachrüstsatz kann auch im Rahmen einer passiven Parkführung eingesetzt werden. Bei dieser Funktionalität des erfindungsgemäß vorgeschlagenen Nachrüstsatzes, in dem die optische Odometrie Anwendung findet, kann bei Passage des Fahrzeuges 10 an einer Parklücke, diese durch Objekterfassungssensoren, 14 beispielsweise Ultraschallsensoren, erfasst werden. Durch die aufgenommenen Signale kann die gewonnene Information hinsichtlich Länge und Tiefe beziehungsweise auch ein Lagewinkel der Parklücke vermessen werden. Mit dem erfindungsgemäß vorgeschlagenen Kamerasystem 22 kann eine Positionsänderung des Fahrzeuges 10 erfasst werden und diese Informationen können Eingang in eine virtuelle Karte finden, die die Erkennung und Klassifizierung sowie die Vermessung der Parklücke ermöglicht. Neben einer solchen Art erfolgenden Parklückenvermessung kann unter Anwendung der erfindungsgemäß vorgeschlagenen Lösung eine passive Führung in diese erreicht werden. Hierbei wird unter Rückgriff auf die vorstehend gewonnen Informationen über Lage, Größe und Winkellage der Parklücke und die Fahrzeugposition des eigenen Fahrzeuges relativ zu dieser eine optimale Einparktrajektorie berechnet. Diese berechnete Trajektorie erlaubt es dem Fahrer Lenkanweisungen anzubieten, damit die Lenkbewegungen eine Bewegung des Fahrzeuges 10 entlang dieser berechneten Trajektorie zur Folge haben. Außerdem können dem Fahrer Anweisungen für die zu fahrende Wegstrecke und die Richtung gegeben werden, was beispielsweise so lange erfolgt, bis die nächste Lenkanweisung vorliegt.

Während der Ausgabe von Anweisungen, insbesondere Lenkanweisungen an den Fahrer wird stets die aktuelle, tatsächliche Fahrzeugposition auf der berechneten Trajektorie berücksichtigt. Bei Änderung der tatsächlichen Fahrzeugposition wird die Trajektorie neu geplant beziehungsweise es erfolgt eine Berücksichtigung neu erkannter, auf der zuvor berechneten Fahrzeugtrajektorie liegende Hindernissen. Durch die erfindungsgemäß vorgeschlagene Lösung können in dieser Phase folgende Funktionen durchgeführt werden:

Das Kamerasystem 22 erlaubt es, die Position zur Änderung des Fahrzeuges 10 zu erfassen. Somit wird eine neue Berechnung der Trajektorie der Abweichung von dieser möglich. Daraus ergeben sich aktualisierte Informationen, die an den Fahrer ausgegeben werden können, so z.B. eine Information dahingehend, wie weit noch mit dem aktuellen Lenkeinschlag gefahren werden kann. Durch diesen Zusammenhang, besteht die Möglichkeit, zum Erreichen eines Stoppunktes auf einen Bahnabschnitt mit konstantem Lenkeinschlag zum Anhalten aufzufordern und einen neuen Lenkeinschlag vorzugeben. Desweiteren besteht die Möglichkeit, unterwegs erfasste Informationen der Objekterfassungssensor 14 in eine intern visuelle Karte aufzunehmen, so dass diese Informationen in die Bahnplanung eine optisch oder akustisch aufzugebende Objektwarnung einfließen können.

## Patentansprüche

1. Verfahren zur Ermittlung einer Relativposition zwischen einem Fahrzeug (10) und einem seitlich von diesem befindlichen Objekt (12), mit nachfolgenden Verfahrensschritten:
a) Erfassung des Objektes (12) durch mindestens einen seitlichen Objekterfassungssensor (14) bei Vorbeifahrt des Fahrzeuges (10),
b) Erfassung einer Fahrzeugbewegung (30) durch ein im Heckbereich des Fahrzeuges (10) oder im Bereich der Windschutzscheibe des Fahrzeuges (10) oder im Bereich einer Seitenscheibe des Fahrzeuges (10) angeordnetes Kamerasystem (22), welches Videobilder (36, 38) zu verschiedenen Aufnahmezeitpunkten (48, 50) erzeugt,
c) Verknüpfen der erfassten Fahrzeugbewegungen (30) mit einer Montageposition (44) des Kamerasystems (22), der Position des mindestens einen seitlichen Objekterfassungssensors (14) und eines Fahrzeugdrehpunktes (46),
d) Bestimmung einer relativen Positionsänderung des Fahrzeuges (10) zum zuvor gemäß Verfahrensschritt (a) erfassten Objekt (12).

2. Verfahren gemäß Anspruch 1, **dadurch gekennzeichnet, dass** das Kamerasystem (22) kontinuierlich Videobilder (36, 38) während der Fahrzeugbewegung (30) erzeugt.

3. Verfahren gemäß einem der vorhergehenden Ansprüche, **dadurch gekennzeichnet, dass** die Fahrzeugbewegung (30) auf Basis der Videobilder (36, 38) relativ zu einem gemäß Verfahren Schritt (a) vorher erfassten Objekt (12) erfolgt.

4. Verfahren gemäß einem der vorhergehenden Ansprüche, **dadurch gekennzeichnet, dass** die Videobilder (36, 38) in einem Steuergerät (18) hinsichtlich der Bewegung des Kamerasystems (22) relativ zur Umgebung des Fahrzeuges (10) ausgewertet werden.

5. Verfahren gemäß einem der vorhergehenden Ansprüche, **dadurch gekennzeichnet, dass** abhängig von einem sich aus der Positionsänderung des Fahrzeuges (10) zum Objekt (12) ergebenden Abstand, eine akustische und/oder eine optische Warnung generiert wird.

## Claims

1. Method for determining a relative position between a vehicle (10) and an object (12) located to the side thereof, having the following method steps:
a) sensing the object (12) by means of at least one lateral object-sensing sensor (14) during forward travel of the vehicle (10),
b) sensing a vehicle movement (30) by means of a camera system (22) which is arranged in the rear region of the vehicle (10) or in the region of the windscreen of the vehicle (10) or in the region of a side window of the vehicle (10) and which generates video images (36, 38) at various recording times (48, 50),
c) linking the sensed vehicle movements (30) to a mounting position (44) of the camera system (22), the position of the at least one lateral object-sensing sensor (14) and a centre of rotation (46) of the vehicle, and
d) determining a relative change in position of the vehicle (10) with respect to the object (12) sensed previously according to method step (a).

2. Method according to Claim 1, **characterized in that** the camera system (22) continuously generates video images (36, 38) during the vehicle movement (30).

3. Method according to one of the preceding claims, **characterized in that** the vehicle movement (30) takes place on the basis of the video images (36, 38), relative to an object (12) which has been sensed previously according to method step (a).

4. Method according to one of the preceding claims, **characterized in that** the video images (36, 38) are evaluated with respect to the movement of the camera system (22) relative to the environment of the vehicle (10) in a control device (18).

5. Method according to one of the preceding claims, **characterized in that** an acoustic and/or visual warning is generated as a function of the distance resulting from the change in position of the vehicle (10) with respect to the object (12).

## Revendications

1. Procédé pour calculer une position relative entre un véhicule (10) et un objet (12) se trouvant à côté de lui, avec les étapes de procédé suivantes :
a) détection de l'objet (12) par au moins un capteur de détection d'objet (14) latéral en situation de conduite en marche avant du véhicule (10) ;
b) détection d'un mouvement de véhicule (30) par un système de caméra (22) disposé dans la zone arrière du véhicule (10) ou dans la zone du pare-brise du véhicule (10) ou dans la zone d'une vitre latérale du véhicule (10), ladite caméra produisant des images vidéo (36, 38) à différents instants de prise (48, 50) ;
c) association des mouvements de véhicule (30) détectés avec une position de montage (44) du système de caméra (22), de la position de l'au moins un capteur de détection d'objet (14) latéral et d'un point de rotation de véhicule (46) ;
d) détermination d'un changement de position relative du véhicule (10) par rapport à l'objet détecté (12) précédemment selon l'étape de procédé (a).

2. Procédé selon la revendication 1, **caractérisé en ce que** le système de caméra (22) produit des images vidéo (36, 38) en continu pendant le mouvement de véhicule (30).

3. Procédé selon l'une quelconque des revendications précédentes, **caractérisé en ce que** le mouvement de véhicule (30) se produit sur la base des images vidéo (36, 38) par rapport à un objet (12) précédemment détecté par rapport à une étape (a) selon le procédé.

4. Procédé selon l'une quelconque des revendications précédentes, **caractérisé en ce que** les images vidéo (36, 38) sont analysées dans un appareil de commande (18) en relation avec le mouvement du système de caméra (22) par rapport à l'environnement du véhicule (10).

5. Procédé selon l'une quelconque des revendications précédentes, **caractérisé en ce qu'**un avertissement acoustique et/ou optique est généré en fonction d'une distance découlant du changement de position du véhicule (10) par rapport à l'objet (12).
